# EUROPÄISCHE PATENTSCHRIFT

(11) **EP 2 624 031 B1**
(45) Veröffentlichungstag und Bekanntmachung des Hinweises auf die Patenterteilung: **13.12.2017**
(21) Anmeldenummer: 13165803.1
(22) Anmeldetag: 08.04.2011
(51) Int. Cl.: G02B 6/28, G02B 6/42, B23K 26/06, G02B 6/02, B23K 26/067, B23K 26/073, G02B 6/26, B23K 103/06, G02B 6/35, G02B 6/036, B23K 26/064

(54) **Verfahren und Anordnung zum Erzeugen eines Laserstrahls mit unterschiedlicher Strahlprofilcharakteristik mittels einer Mehrfachclad-Faser**
Method and Arrangement for generating a laser beam having a differing beam profile characteristic by means of a multi-clad fibre
Procédé et agencement pour générer un faisceau laser avec une caractéristique de profil de faisceau différente au moyen d'une fibre plusieurs fois chemisée

(30) Priorität: 08.04.2010 DE 102010003750
(43) Veröffentlichungstag der Anmeldung: 07.08.2013
(62) Teilanmeldung aus: 11712871.0
(73) Patentinhaber: TRUMPF Laser-und Systemtechnik GmbH, 71254 Ditzingen (DE)
(72) Erfinder: Huber, Rudolf, 78554 Aldingen-Aixheim (DE); Andreasch, Wolfgang, 71384 Weinstadt (DE); Dr. Huonker, Martin, 78661 Dietingen (DE)
(74) Vertreter: Kohler Schmid Möbus Patentanwälte

(56) Entgegenhaltungen:
- EP-A- 0 362 466
- DE-A1- 3 833 992
- DE-A1- 3 833 993
- DE-C1- 4 200 587
- FR-A1- 2 284 892
- US-A- 4 475 788
- US-A- 5 684 642
- US-A1- 2002 168 139
- US-A1- 2002 172 485

## Beschreibung

Die Erfindung betrifft ein Verfahren und eine Anordnung zum Erzeugen eines Laserstrahls mit unterschiedlicher Strahlprofilcharakteristik.

In der Materialbearbeitung durch Laserstrahlung ergeben sich für verschiedene Prozesse und Anwendungen jeweils unterschiedliche Erfordernisse an charakteristische Laserstrahlparameter, wie z.B. Fokusdurchmesser, Intensitätsverteilung oder Strahlprofilbeschaffenheit an der Bearbeitungsstelle. Üblicherweise ist daher ein Prozess- oder Applikationswechsel bei einer Laserbearbeitungsanlage mit einem entsprechenden Umrüstungsaufwand verbunden, der von einem relativ einfachen Austausch einzelner optischer Komponenten bis hin zum Übergang auf eine andere Anlage reichen kann.

Aus der DE 38 33 992 A1 ist beispielsweise ein Verfahren zum Erreichen bestimmter Laserstrahleigenschaften bekannt, bei dem die Laserstrahlen zweier Laserstrahlquellen unter verschiedenen Einkopplungswinkeln in eine konventionelle Lichtleitfaser eingekoppelt werden. Dabei erfolgt eine Strahlformung in Abhängigkeit von den Einkopplungswinkeln der beiden Laserstrahlen mit unterschiedlichen Wellenlängen, welche für die jeweilige biologische oder medizinische Bearbeitungsaufgabe passend gewählt werden. Neben der Verwendung zweier Laserquellen kann bei diesem Verfahren auch eine einzige Laserquelle zum Einsatz kommen, deren Wellenlänge umschaltbar ist. Die Einkopplungsbedingung in die Lichtleitfaser hängt hierbei wesentlich von der jeweiligen Wellenlänge ab. Wenn die Applikationen jedoch beispielsweise keine unterschiedlichen Wellenlängen oder vielmehr sogar die Verwendung einer einzigen Wellenlänge erfordern, erweist sich das geschilderte Verfahren wegen einer für solche Fälle unverhältnismäßigen Komplexität und einer einschränkenden Spezialisierung auf Anwendungen einer anderen Art als nicht optimal. Weiterhin ist das vorgeschlagene Verfahren auf die wellenlängenabhängige Strahlformung beschränkt, was wiederum zu Einschränkungen für seine Anwendungsmöglichkeiten führt. Das Dokument DE 42 00 587-C1 beschreibt einen Lichtwellenapplikator zum Schneiden von biologischen Gewebe bestehend aus einem Laser, einer Stufenindexfaser, einer Fokussiereinrichtung und einem Manipulator mit Druckknopf. Mit dieser Vorrichtung kann das Abstrahlprofil durch den Benutzer verändert werden.

Das Dokument EP 362 466-A2 beschreibt eine Lichtleitereinrichtung zur Übertragung mehrerer voneinander unabhängiger optischer Strahlenbündel.

Aufgabe der vorliegenden Erfindung ist es daher, ein Verfahren zum Erzeugen eines Laserstrahls mit unterschiedlichen Laserstrahlprofilcharakteristiken anzugeben, welches unter Verwendung mehrerer Laserstrahlquellen oder nur einer einzigen Laserstrahlquelle, insbesondere mit einer einzigen Wellenlänge, eine anwendungsspezifische Änderung der Laserstrahlcharakteristik mit verhältnismäßig geringem Aufwand erlaubt, sowie eine Anordnung dazu bereitzustellen. Außerdem ist dabei angestrebt, bei reduzierter Komplexität der Anordnung bzw. des Verfahrens gleichzeitig das Spektrum der Anpassungsmöglichkeiten von Strahlprofilcharakteristiken an diverse Applikationen möglichst weit auszudehnen.

Diese Aufgabe wird erfindungsgemäß durch ein Verfahren gelöst, bei dem ein Laserstrahl in das eine Faserende einer Mehrfachclad-Faser, insbesondere einer Doppelclad-Faser, eingekoppelt und aus dem anderen Faserende der Mehrfachclad-Faser ausgekoppelt wird und zum Erzeugen unterschiedlicher Strahlprofilcharakteristiken des ausgekoppelten Laserstrahls der einfallende Laserstrahl wahlweise entweder zumindest in den inneren Faserkern der Mehrfachclad-Faser oder zumindest in mindestens einen äußeren Ringkern der Mehrfachclad-Faser eingekoppelt wird oder aber wahlweise ein erster Laserstrahl zumindest in den inneren Faserkern der Mehrfachclad-Faser und ein unterschiedlicher zweiter Laserstrahl zumindest in mindestens einen äußeren Ringkern der Mehrfachclad-Faser eingekoppelt werden.

Unter einer Mehrfachclad-Faser wird im Sinne der Erfindung eine Faser mit einem inneren Faserkern und zumindest einem äußeren Ringkern verstanden, beispielsweise eine Doppelclad-Faser mit einem einzigen äußeren Ringkern oder aber auch eine Tripleclad-Faser mit einem sich dem ersten äußeren Ringkern anschließenden weiteren äußeren Ringkern. Zum Verändern der Strahlprofilcharakteristik des ausgekoppelten Laserstrahls wird der einfallende Laserstrahl unterschiedlich in einen oder mehrere der Kerne der Mehrfachclad-Faser eingekoppelt.

Der Einfachheit halber wird die Erfindung in der folgenden Beschreibung anhand einer Doppelclad-Faser beschrieben, wobei für den Fachmann ersichtlich ist, dass das erfindungsgemäße Prinzip ohne weiteres auch auf Mehrfachclad-Fasern mit weiteren, sich an den ersten äußeren Ringkern anschließenden äußeren Ringkernen übertragbar ist.

Eine Doppelclad-Faser mit zwei Kernen weist einen inneren Faserkern sowie ein diesen Faserkern umgebendes, möglichst dünnes und niedrig brechendes Cladding auf. Daran anschließend folgt ein einzelner äußerer Ringkern, der ebenfalls von einem niedrig brechenden zweiten Cladding umgeben ist. Darüber kann eine weitere Schicht aus Glas folgen, die den Außendurchmesser der Faser festlegt, aber keinen Einfluss auf deren Funktion im Sinne der Strahlführung hat. Den Abschluss bildet ein Coating aus einem Kunststoffmaterial, wie Silikon und/oder Nylon, das dem Schutz der Faser dient.

Durch die Verwendung einer Doppelclad-Faser kann erfindungsgemäß je nach Einkopplung in den inneren Faserkern, in den äußeren Ringkern oder sowohl in den inneren Faserkern als auch in den äußeren Ringkern zwischen verschiedenen Strahlprofilcharakteristiken am Faserausgang gewählt werden. Bei der Materialbearbeitung mittels Laserstrahlung, insbesondere unter Verwendung hoher Leistungen im kW-Bereich, ermöglicht eine Umschaltung zwischen diesen Einkopplungsvarianten beispielsweise die Wahl zwischen einer vergleichsweise guten Strahlqualität mit einem scharfen Fokus, wie sie z.B. für einen Laserschneidprozess erforderlich ist, und einer demgegenüber "verminderten" Strahlqualität mit einem "verwaschenen" Fokus und mit nahezu gleichmäßiger Intensitätsverteilung im Strahlquerschnitt, die sich insbesondere für Schweißprozesse eignet.

Um eine hohe Laserstrahlqualität zu erhalten, wird der Laserstrahl in den inneren Faserkern der Doppelclad-Faser eingekoppelt, die sich in diesem Fall wie eine konventionelle Standardfaser verhält, deren Faserkern von einem niedrig brechenden Cladding umgeben ist. Wird hingegen ein Laserstrahl mit verbreitertem Profil, mit beispielsweise gleichmäßiger Intensität, benötigt, so wird der Laserstrahl in den äußeren Ringkern oder sowohl in den inneren Faserkern als auch in den äußeren Ringkern eingekoppelt. Je nach Anwendung lässt sich so am Ausgang der Doppelclad-Faser ein Laserstrahl mit einem gefüllten Kreisprofil gemäß dem inneren Faserkern, mit einem Ringprofil gemäß dem äußeren Ringkern, mit einem gefüllten Kreisprofil gemäß den beiden Kernbereichen zusammen (mit einem schmalen fehlenden Ring durch das erste Cladding) oder aber mit den entsprechenden Zwischenstufen der genannten Profilcharakteristiken erhalten.

In einer bevorzugten Variante des erfindungsgemäßen Verfahrens erfolgt zum wahlweisen Einkoppeln des Laserstrahls in die Doppelclad-Faser eine Relativbewegung zwischen dem einfallenden Laserstrahl und der einkoppelseitigen Stirnfläche der Doppelclad-Faser in einer Richtung quer zum Laserstrahl, insbesondere in Form einer Parallelverschiebung. Wird die einkoppelseitige Stirnfläche der Doppelclad-Faser quer zum Laserstrahl bewegt, so sind keine zusätzlichen optischen Elemente erforderlich, um zwischen den unterschiedlichen Einkopplungen umzuschalten. Bei einer ausreichend langen Freistrahlpropagation des Laserstrahls vor seinem Auftreffen auf die Doppelclad-Faser ist auch eine winkelförmige Ablenkung des Laserstrahls, die ebenfalls als Ablenkung quer zur Achse der einkoppelseitigen Stirnfläche verstanden wird, möglich, um den Laserstrahl in den inneren Faserkern und/oder in den äußeren Ringkern der Doppelclad-Faser einzukoppeln. Es handelt sich in diesem Fall um eine Drehung der Laserstrahlachse um einen Punkt anstelle einer Verschiebung, wobei die Veränderung des Einfallswinkels für die Einkopplung vernachlässigbar bleiben soll.

In einer weiteren bevorzugten Variante des erfindungsgemäßen Verfahrens wird zum wahlweisen Einkoppeln des Laserstrahls in die Doppelclad-Faser der einfallende Laserstrahl mit jeweils unterschiedlichen Strahlquerschnitten, insbesondere mit jeweils unterschiedlichen Strahldurchmessern, auf die einkoppelseitige Stirnfläche der Doppelclad-Faser abgebildet. Diese unterschiedlichen Strahldurchmesser können beispielsweise mit einer entlang der Laserstrahlachse verfahrbaren Optik, wie z.B. eine Linse oder Blende, eingestellt werden, die abhängig von ihrer Verfahrposition den Laserstrahl entweder nur in den inneren Faserkern oder in den äußeren Ringkern oder sowohl in den inneren Faserkern als auch in den äußeren Ringkern einkoppelt. Alternativ kann ein anderer Strahlquerschnitt bzw. - durchmesser auch dadurch eingestellt werden, dass eine Optik, wie z.B. eine Linse, oder eine Blende wahlweise in den Strahlengang des Laserstrahls hinein- oder herausbewegt wird. In einer weiteren Alternative kann der Strahlquerschnitt bzw. -durchmesser durch Verwendung einer Laserquelle mit der wahlweisen Führung über Lichtwellenleiter unterschiedlicher Strahlführungscharakteristik, wie sie bspw. über den Durchmesser des strahlungsführenden Lichtwellenleiterkerns eingestellt werden kann, an gewünschte Einkoppelverhältnisse in die Doppelclad-Faser angepasst werden. Dieses Prinzip der Wahl der Einkoppelverhältnisse in die Doppelclad-Faser ist dabei auch auf die Verwendung den vorgelagerten Lichtwellenleitern zugeordneten Laserstrahlquellen, insbesondere auf Laserstrahlquellen unterschiedlicher Strahlqualitäten, übertragbar.

In einer anderen bevorzugten Variante des erfindungsgemäßen Verfahrens wird zum Einkoppeln des Laserstrahls sowohl in den inneren Faserkern als auch in den mindestens einen äußeren Ringkern der einfallende Laserstrahl in mindestens zwei Teilstrahlen geteilt, die jeweils in einen der beiden Kerne der Doppelclad-Faser eingekoppelt werden. Auf diese Weise lässt sich zum einen die Aufteilung der Strahlungsleistung zwischen dem inneren Faserkern und dem äußeren Ringkern, wenn diese gleichzeitig angesprochen werden sollen, besonders gut kontrollieren. Zum anderen ist es mit den beiden Teilstrahlen besonders einfach möglich, den Bereich des ersten Claddings der Doppelclad-Faser bei der Einkopplung auszusparen. Denn es ist gerade für Anwendungen im Hochleistungsbereich wichtig, dass keine Laserstrahlung in das erste oder zweite Cladding der Doppelclad-Faser eingekoppelt wird. Eine solche ins Cladding eingekoppelte Strahlung propagiert mit großem Winkel bezüglich der Faserachse im inneren Faserkern oder äußeren Ringkern und tritt am Faserende ebenfalls unter großem Winkel aus, wodurch sich eine daran anschließende Optik aufheizen kann. Zudem kann im zweiten Cladding befindliche Strahlung das Coating der Faser zerstören. Um die Ausbreitung von Laserstrahlung in den Claddings sicher zu verhindern, können beispielsweise Modestripper eingesetzt werden. Entsprechend bevorzugt ist es daher auch, keine Laserstrahlung während des Schaltvorgangs in die Doppelclad-Faser einzukoppeln, um eine mögliche Propagation in den Claddings zu verhindern. Dies kann beispielsweisedurch ein Ausschalten des Lasers oder aber auch eine Ablenkung der Strahlung in einen Absorber durch Verwendung von Strahlverschlüssen erfolgen.

Die Erfindung betrifft in einem weiteren Aspekt auch eine zum Durchführen des oben beschriebenen Verfahrens geeignete Anordnung, die erfindungsgemäß eine Doppelclad-Faser mit einem inneren Faserkern und mindestens einem äußeren Ringkern sowie eine schaltbare Vorrichtung mit mindestens zwei Schaltstellungen aufweist, in denen der einfallende Laserstrahl wahlweise entweder zumindest in den inneren Faserkern der Doppelclad-Faser oder zumindest in den mindestens einen äußeren Ringkern der Doppelclad-Faser eingekoppelt wird oder aber wahlweise ein erster Laserstrahl zumindest in den inneren Faserkern der Mehrfachclad-Faser und ein unterschiedlicher zweiter Laserstrahl zumindest in mindestens einen äußeren Ringkern der Mehrfachclad-Faser eingekoppelt werden.

In einer bevorzugten Ausführungsform der erfindungsgemäßen Anordnung ist die schaltbare Vorrichtung durch eine verstellbare Ablenkoptik, die in ihren mindestens zwei Schaltstellungen einen einfallenden Laserstrahl in Richtung quer zur Achse der einkoppelseitigen Stirnfläche der Doppelclad-Faser unterschiedlich weit ablenkt, oder durch eine Stelleinrichtung, die in ihren mindestens zwei Schaltstellungen die einkoppelseitige Stirnfläche in Richtung quer zum einfallenden Laserstrahl unterschiedlich weit bewegt, gebildet. Unter einer Ablenkoptik im Sinne der Erfindung ist jede verstellbare Optik zu verstehen, die einen Laserstrahl in Abhängigkeit der Verstellposition in zumindest teilweise unterschiedliche Faserbereiche der Doppelclad-Faser einkoppelt.

In einer anderen bevorzugten Ausführungsform der erfindungsgemäßen Anordnung ist die schaltbare Vorrichtung durch eine bewegbare Optik oder Blende gebildet, die in ihren mindestens zwei Schaltstellungen den einfallenden Laserstrahl mit jeweils unterschiedlichen Strahlquerschnitten, insbesondere mit jeweils unterschiedlichen Strahldurchmessern, auf die einkoppelseitige Stirnseite der Doppelclad-Faser abbildet. Die bewegbare Optik kann beispielsweise Prismen, planparallele (Glas)Platten, Sammel- und Zerstreuungslinsen, Spiegel, diffraktive optische Elemente etc. einzeln oder in Kombinationen aufweisen.

Besonders bevorzugt ist die Optik durch einen Strahlteiler, insbesondere durch eine in den Laserstrahl hinein bewegbare optische Keilplatte, zum Teilen des einfallenden Laserstrahls in mindestens zwei Teilstrahlen gebildet, welche jeweils in einen der Kerne der Doppelclad-Faser eingekoppelt werden. Vorteilhaft ist dabei die Aufteilung der Intensität zwischen dem inneren Faserkern und dem äußeren Ringkern davon abhängig, wie weit der Strahlteiler in den Strahlengang eingreift. Dies ermöglicht es, die Intensitätsaufteilung und damit das Strahlprofil des ausgekoppelten Laserstrahls optimal an die jeweilige Applikation anzupassen.

Die Keilplatte kann aber ebenso als Strahlweiche eingesetzt werden, um den Laserstrahl in seiner Gesamtheit entweder in den inneren Faserkern oder in den äußeren Ringkern einzukoppeln. Einen vergleichbaren Effekt ruft die Bewegung/Verschiebung der Einkoppeloptik quer zur optischen Achse des Laserstrahls hervor. Die Einkoppeloptik befindet sich bei dieser Variante in den schaltbaren Zuständen jeweils im Strahlengang, wobei sich je nach Position der Einkoppeloptik unterschiedliche Strahlablenkungen ergeben. Da hierbei keine Strahlteilung vorgenommen wird und somit eine Aufteilung der Intensitäten nicht über Teilstrahlen erfolgen kann, wird bevorzugt entweder in den inneren Faserkern oder den äußeren Ringkern abgelenkt und zwischen zumindest zwei, diese Positionen repräsentierenden Zuständen geschaltet.

Vorzugsweise beträgt der Durchmesser des inneren Faserkerns der Doppelclad-Faser höchstens ca. 200 µm, insbesondere höchstens ca. 150 µm, vorzugsweise höchstens ca. 120 µm. Beispielsweise lässt sich mit einem Durchmesser des inneren Faserkerns von ca. 100 µm eine für anspruchsvolle Laseranwendungen, wie z.B. für Laserschneidprozesse, gute Qualität des ausgekoppelten Laserstrahls bei einer Einkopplung in den inneren Faserkern erreichen.

Die Ringstärke des mindestens einen äußeren Ringkerns der Doppelclad-Faser wird bevorzugt größer oder gleich dem Durchmesser des inneren Faserkerns gewählt. Der äußere Ringdurchmesser entspricht dabei dem für bestimmte Anwendungen, wie z.B. für Laserschweißen, erforderlichen breiteren Laserstrahlprofil und beträgt applikationsspezifisch beispielsweise ca. 600 µm oder 400 µm.

In einer vorteilhaften Ausführungsform der erfindungsgemäßen Anordnung ist bei der Doppelclad-Faser die numerische Apertur des den inneren Faserkern umgebenden ersten Claddings höher als die numerische Apertur des den mindestens einen äußeren Ringkern umgebenden zweiten Claddings. Hierdurch kann versehentlich in das erste Cladding eingekoppelte Strahlung in das zweite Cladding eindringen und dort von einem Modestripper ausgekoppelt und angezeigt werden. Dies erleichtert die Justage des inneren Faserkerns sowie die Fehlerüberwachung. Das erste Cladding weist beispielsweise eine standardmäßige numerische Apertur von 0,22 (Toleranz +/- 0,02) auf, wobei das zweite Cladding in diesem Fall bevorzugt eine numerische Apertur von 0,18 (Toleranz +/- 0,015) aufweist, und sollte ausreichend dick sein, um die Laserstrahlung gut zu führen, z.B. 10 µm dick, bevorzugt weniger, wie 3 bis 5 µm, bei einem Kern-Mantel-Verhältnis (CCDR) von 1,2. Das erste Cladding bildet dabei mit dem inneren Faserkern eine konventionelle Transportfaser nach.

In einer anderen bevorzugten Ausführungsform weist die schaltbare Vorrichtung eingangsseitig mindestens zwei Lichtleiter auf, über die mindestens zwei unterschiedliche Laserstrahlen zuführbar sind, wobei die schaltbare Vorrichtung wahlweise den einen Laserstrahl zumindest in den inneren Faserkern der Mehrfachclad-Faser und den anderen Laserstrahl zumindest in mindestens einen äußeren Ringkern der Mehrfachclad-Faser einkoppelt.

Die beschriebenen Ausführungsformen unter Verwendung einer oder mehrerer Laserstrahlquellen können auch kombiniert Anwendung finden, bspw. innerhalb eines kaskadierten Systems.

Weitere Vorteile der Erfindung ergeben sich aus der nachfolgenden Beschreibung und der Zeichnung. Die gezeigten und beschriebenen Ausführungsformen sind nicht als abschließende Aufzählung zu verstehen, sondern haben vielmehr einen beispielhaften Charakter für die Schilderung der Erfindung. Ebenso können die vorstehend genannten und die noch weiter ausgeführten Merkmale erfindungsgemäß jeweils einzeln für sich oder zu mehreren in beliebigen Kombinationen Verwendung finden.

Die Erfindung ist in einigen Ausführungsbeispielen in der Zeichnung dargestellt und wird in der nachfolgenden Beschreibung näher erläutert. Es versteht sich, dass die Darstellung in den Figuren der Zeichnung jeweils nur schematisch zu verstehen ist. Sie enthält keinerlei Einschränkungen im Hinblick auf Einzelheiten oder Abmessungen und ist nicht maßstabsgetreu. Es zeigen:
- Fign. 1 bis 3: drei erfindungsgemäße Anordnungen zum Erzeugen eines Laserstrahls mit unterschiedlicher Strahlprofilcharakteristik, bei denen ein Laserstrahl in das eine Faserende einer Doppelclad-Faser eingekoppelt und aus dem anderen Faserende der Doppelclad-Faser ausgekoppelt wird;
- Fig. 4: den radialen Verlauf des Brechungsindex der in Fign. 1 bis 3 gezeigten Doppelclad-Faser;
- Fign.5a bis 5c: verschiedene mögliche Strahlprofile des aus der Doppelclad-Faser der Fign. 1 bis 3 ausgekoppelten Laserstrahls; und
- Fig. 6: eine weitere erfindungsgemäße Anordnung zum Erzeugen eines Laserstrahls mit unterschiedlicher Strahlprofilcharakteristik, wobei wahlweise ein erster Laserstrahl in den inneren Faserkern einer Doppelclad-Faser und ein unterschiedlicher zweiter Laserstrahl sowohl in den inneren Faserkern als auch in den äußeren Ringkern der Doppelclad-Faser eingekoppelt werden.

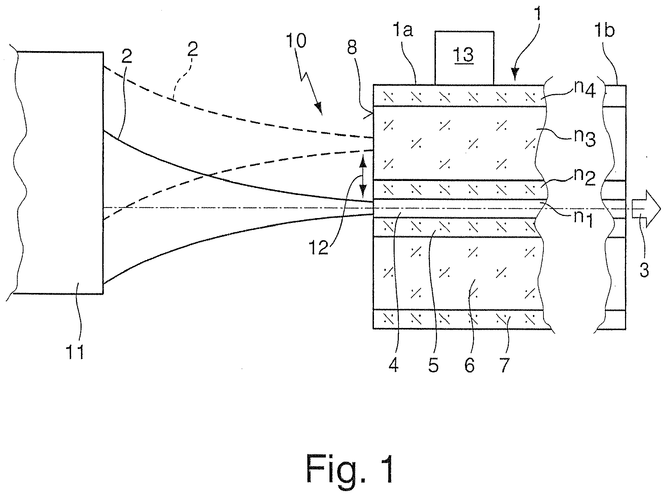

**Fign. 1 bis 3** zeigen drei verschiedene Anordnungen **10**, **20**, **30** zum Erzeugen eines Laserstrahls mit unterschiedlicher Strahlprofilcharakteristik, wobei der Laserstrahl in das eine Faserende **1a** einer Mehrfachclad-Faser **1**, die im vorliegenden Fall als Doppelclad-Faser 1 ausgebildet ist, eingekoppelt und aus dem anderen Faserende **1b** der Doppelclad-Faser 1 ausgekoppelt wird. Der einfallende Laserstrahl ist mit **2** und der ausgekoppelte Laserstrahl schematisch mit **3** bezeichnet.

Wie in Fig. 1 gezeigt, weist die Doppelclad-Faser 1 einen inneren Faserkern **4** (z.B. aus undotiertem Quarzglas) mit einem Brechungsindex ***n***₁ sowie ein den inneren Faserkern 4 umgebendes dünnes erstes Cladding **5** (z.B. aus dotiertem Quarzglas) auf, dessen Brechungsindex ***n***₂ niedriger ist als ***n***₁. Daran anschließend folgt ein äußerer Ringkern **6** (z.B. aus undotiertem Quarzglas) mit dem Brechungsindex ***n*₃**, der ebenfalls von einem niedrig brechenden zweiten Cladding **7** (z.B. aus dotiertem Quarzglas) mit Brechungsindex ***n*₄** umgeben ist. Die Brechungsindizes *n₁* und *n₃* können gleich oder unterschiedlich sein; gleiches gilt für die Brechungsindizes *n₂* und *n₄*. Darüber kann eine weitere Schicht aus Glas folgen (nicht gezeigt), die den Außendurchmesser der Faser festlegt, aber keinen Einfluss auf deren Funktion im Sinne der Strahlführung hat. Den Abschluss bildet typischerweise ein Coating (nicht gezeigt) aus einem Kunststoffmaterial, wie Silikon und/oder Nylon, zum Schutz der Faser.

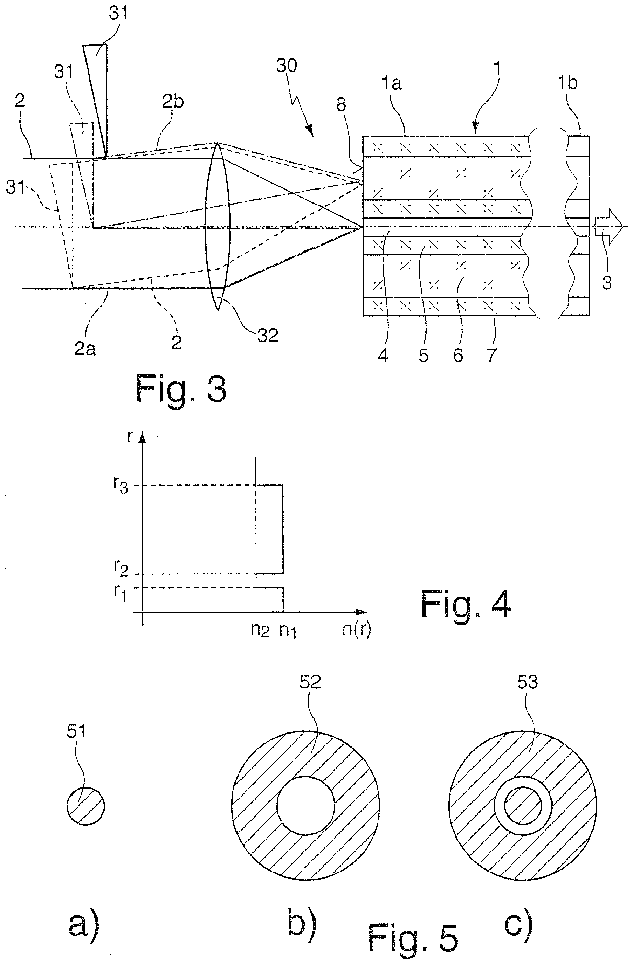

**Fig. 4** zeigt schematisch die radiale Abhängigkeit des Brechungsindex n innerhalb der Doppelclad-Faser 1, bei der *n₁* = *n*₃ und *n₂* = *n*₄ ist. Dargestellt sind ein dem inneren Faserkern 4 entsprechender Bereich mit Radius *r*₁ und hohem Brechungsindex *n*₁, ein dem ersten Cladding 5 entsprechender Ringbereich zwischen den Radien *r*₁ und *r*₂ mit niedrigerem Brechungsindex *n*₂, ein dem äußeren Ringkern 6 entsprechender Ringbereich mit Außenradius *r*₃ und hohem Brechungsindex *n*₁, sowie abschließend das zweite Cladding 7 mit niedrigem Brechungsindex *n*₂. Aufgrund des niedrigeren Brechungsindex der Claddings 5, 7 wird Licht im inneren Faserkern 4 und im äußeren Ringkern 6 jeweils durch Totalreflexion geführt.

Zum Verändern der Strahlprofilcharakteristik des ausgekoppelten Laserstrahls 3 kann, wie unten im Detail beschrieben, der auf die einkoppelseitige Stirnfläche **8** der Doppelclad-Faser 1 einfallende Laserstrahl 2 mittels einer schaltbaren Vorrichtung wahlweise in den inneren Faserkern 4 oder in den äußeren Ringkern 6 oder sowohl in den inneren Faserkern 4 als auch den äußeren Ringkern 6 der Doppelclad-Faser 1 eingekoppelt werden.

Bei der in Fig. 1 gezeigten Anordnung 10 ist die schaltbare Vorrichtung zum wahlweisen Einkoppeln des Laserstrahls 2 in die Doppelclad-Faser 1 durch eine verstellbare Ablenkoptik **11** mit zwei Schaltstellungen gebildet, welche mit durchgezogenen und gestrichelten Linien dargestellt sind. In diesen beiden Schaltstellungen wird der auf die einkoppelseitige Stirnfläche 8 fokussierte Laserstrahl 2 in Richtung **12** quer zur Achse der einkoppelseitigen Stirnfläche 8 unterschiedlich weit ablenkt, insbesondere unterschiedlich weit parallelverschoben. In der einen Schaltstellung wird der Laserstrahl 2 zentrisch oder exzentrisch zur Faserachse nur in den inneren Faserkern 4 und in der anderen Schaltstellung exzentrisch zur Faserachse nur in den äußeren Ringkern 6 eingekoppelt. Im ersten Fall weist der ausgekoppelte Laserstrahl 3 das in **Fig. 5a** gezeigte Strahlprofil, nämlich ein dem inneren Faserkern 4 entsprechendes schmales ausgefülltes Kreisprofil **51,** sowie eine vergleichsweise hohe Strahlqualität mit einem scharfen Fokus auf, wie es bei der Materialbearbeitung z.B. für einen Laserschneidprozess erforderlich ist. Im zweiten Fall weist der ausgekoppelte Laserstrahl 3 das in **Fig. 5b** gezeigte breitere Strahlprofil, nämlich ein dem äußeren Ringkern 6 entsprechendes Ringprofil **52,** sowie eine vergleichsweise geringere Strahlqualität auf, wie es bei der Materialbearbeitung z.B. für einen Laserschweißprozess gewünscht ist. Unter geeigneten Einkopplungsbedingungen in den äußeren Ringkern 6 weist der ausgekoppelte Laserstrahl 3 ein Top-Hat-Ringstrahlprofil auf, dessen Qualität für viele Applikationen geeignet ist.

Die Ablenkoptik 11, deren Komponenten in Fig. 1 nicht im Einzelnen dargestellt sind, beruht auf dem Fachmann bekannten Prinzipien der Strahlablenkung. Insbesondere kann hierbei ein Ablenkspiegel zum Einsatz kommen. wobei der Ort der Einkopplung in die einkoppelseitige Stirnfläche der Doppelclad-Faser 1 durch die Winkelstellung des Ablenkspiegels bestimmt werden kann oder der Ablenkspiegel die Strahlung positionsabhängig auf verschieden Ausgänge lenken kann, die wiederum verschiedene Einkoppelbereiche definieren. Ein teildurchlässiger oder nur zum Teil im Strahlengang befindlicher Ablenkspiegel kann dabei auch die beschriebene Funktion eines Strahlteilers erfüllen. Bevorzugt beinhaltet die Ablenkoptik 11 zusätzliche Mittel zur Einkopplung des Laserstrahls 2 in die einkoppelseitige Stirnfläche 8 der Doppelclad-Faser 1, wie beispielsweise eine Fokussierlinse, die alternativ aber auch vor oder nach der Ablenkoptik 11 angeordnet sein kann.

Eine ausreichend lange Doppelclad-Faser 1 ermöglicht auch bei exzentrischer Einkopplung des Laserstrahls 2 zur Faserachse in den inneren Faserkern 4 oder in den äußeren Ringkern 6 eine winkelmäßig homogene Intensitätsverteilung im ausgekoppelten Laserstrahl 3.

Wird hingegen sowohl in den inneren Faserkern 4 als auch in den äußeren Ringkern 6 der Doppelclad-Faser 1 eingekoppelt, so weist der ausgekoppelte Laserstrahl 3 das in **Fig. 5c** gezeigte gleichmäßig ausgefüllte breite Strahlprofil **53** mit einem entsprechend dem ersten Cladding 5 ausgesparten Ring auf.

Alternativ (oder auch zusätzlich) zur Ablenkoptik 11 kann die schaltbare Vorrichtung zum wahlweisen Einkoppeln des Laserstrahls 2 in die Doppelclad-Faser 1 auch durch eine z.B. motorisch angetriebene Stelleinrichtung **13** gebildet sein, die die einkoppelseitige Stirnfläche 8 der Doppelclad-Faser 1 in Richtung 12 quer zum einfallenden Laserstrahl 2 unterschiedlich weit verschiebt, wodurch der auf die einkoppelseitige Stirnfläche 8 fokussierte Laserstrahl 2 entweder in den inneren Faserkern 4 oder in den äußeren Ringkern 6 eingekoppelt werden kann.

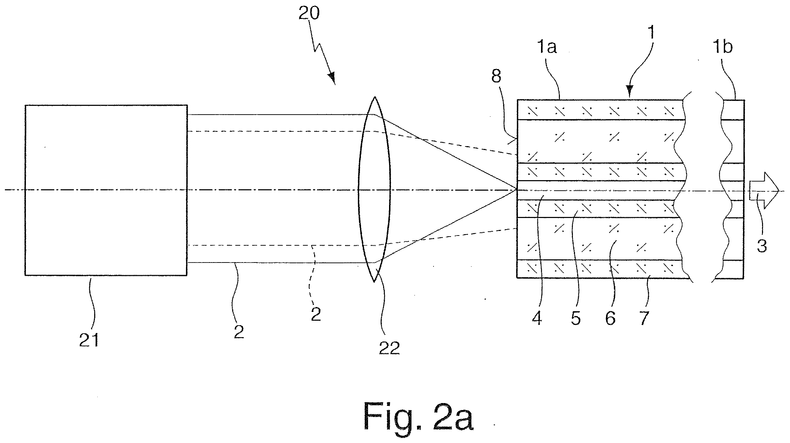

Bei der in **Fig. 2a** gezeigten Anordnung 20 ist die schaltbare Vorrichtung zum wahlweisen Einkoppeln des Laserstrahls 2 in die Doppelclad-Faser 1 durch eine hier lediglich schematisch gezeigte verstellbare Teleskop/Aufweitungsoptik **21** gebildet. In ihren hier nicht näher gezeigten Schaltstellungen weitet die Teleskop/Aufweitungsoptik 21 den einfallenden Laserstrahl 2 auf jeweils unterschiedliche Strahldurchmesser auf. Abhängig vom Strahldurchmesser wird der Laserstrahl 2 dann von einer Einkopplungsoptik (z.B. Linse) **22** mit jeweils unterschiedlichen Strahldurchmessern, in diesem Fall unterschiedlichen Fokusdurchmessern, auf die einkoppelseitige Stirnfläche 8 der Doppelclad-Faser 1 abgebildet. Wie mit durchgezogenen und gestrichelten Linien dargestellt ist, wird der Laserstrahl 2 beispielsweise in einer Schaltstellung der Teleskop/Aufweitungsoptik 21 zentrisch nur in den inneren Faserkern 4 eingekoppelt und in einer anderen Schaltstellung zentrisch sowohl in den inneren Faserkern 4 als auch in den äußeren Ringkern 6 eingekoppelt. Im ersten Fall weist der ausgekoppelte Laserstrahl 3 das Strahlprofil 51 und im zweiten Fall das Strahlprofil 53 auf.

Über den Durchmesser des aufgeweiteten Laserstrahls 2 können der Anteil der in den äußeren Ringkern 6 eingekoppelten Laserstrahlung und damit die Leistungsaufteilung auf den inneren Faserkern 4 und den äußeren Ringkern 6, stufenlos eingestellt werden, wodurch das Strahlprofil des ausgekoppelten Laserstrahls 3 optimal an die jeweilige Applikation angepasst werden kann.

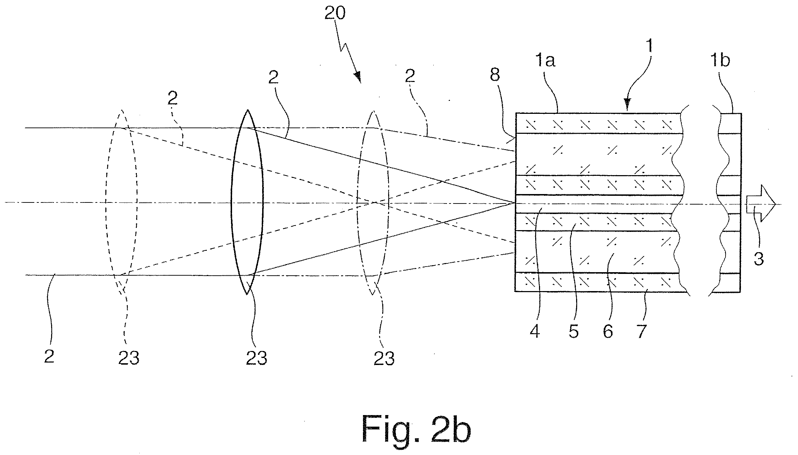

Bei der in **Fig. 2b** gezeigten Anordnung 20 ist die schaltbare Vorrichtung zum wahlweisen Einkoppeln des Laserstrahls 2 in die Doppelclad-Faser 1 durch eine hier als Linse dargestellte Fokussieroptik **23** gebildet, die entlang der Laserstrahlachse in verschiedene Schaltstellungen verschiebbar ist, welche mit durchgezogenen, gestrichelten und strichpunktierten Linien dargestellt sind. In diesen Schaltstellungen wird der einfallende Laserstrahl 2 von der Fokussieroptik 23 mit jeweils unterschiedlichen Strahldurchmessern auf die einkoppelseitige Stirnfläche 8 der Doppelclad-Faser 1 eingekoppelt. In der einen Schaltstellung wird der fokussierte Laserstrahl 2 zentrisch nur in den inneren Faserkern 4 eingekoppelt; in den beiden anderen Schaltstellungen wird der defokussierte Laserstrahl 2 zentrisch sowohl in den inneren Faserkern 4 als auch in den äußeren Ringkern 6 eingekoppelt. Im ersten Fall weist der ausgekoppelte Laserstrahl 3 das Strahlprofil 51 und im zweiten Fall das Strahlprofil 53 auf.

Bei der in Fig. 3 gezeigten Anordnung 30 ist die schaltbare Vorrichtung zum wahlweisen Einkoppeln des Laserstrahls 2 in die Doppelclad-Faser 1 durch eine hier lediglich beispielhaft als optische Keilplatte **31** ausgeführten Strahlweiche gebildet, der zwischen zwei Endstellungen stufenlos verstellbar ist, welche mit durchgezogenen und gestrichelten Linien dargestellt sind. In ihrer einen Endstellung ist die optische Keilplatte 31 außerhalb des Strahlengangs des einfallenden Laserstrahls 2 angeordnet, so dass der gesamte einfallende Laserstrahl 2 über eine Einkopplungsoptik (z.B. Linse) **32** nur in den inneren Faserkern 4 eingekoppelt wird, wodurch der ausgekoppelte Laserstrahl 3 das Strahlprofil 51 aufweist. In ihrer anderen gestrichelt dargestellten Endstellung ist die Keilplatte 31 im gesamten Strahlengang des Laserstrahls 2 angeordnet, so dass der gesamte Laserstrahl 2 von der Keilplatte 31 abgelenkt und über die Einkopplungsoptik 32 nur in den äußeren Ringkern 6 eingekoppelt wird, wodurch der ausgekoppelte Laserstrahl 3 das Strahlprofil 52 aufweist.

Einen vergleichbaren Effekt ruft die Bewegung/Verschiebung der Einkoppeloptik 32 quer zur optischen Achse des Laserstrahls 2 hervor. Die Einkoppeloptik 32 befindet sich bei dieser Variante in den schaltbaren Zuständen jeweils im Strahlengang, wobei sich je nach Position der Einkoppeloptik 32 unterschiedliche Strahlablenkungen ergeben. Da hierbei keine Strahlteilung vorgenommen wird und somit eine Aufteilung der Intensitäten nicht über Teilstrahlen erfolgen kann, wird bevorzugt entweder in den inneren Faserkern 4 oder den äußeren Ringkern 6 abgelenkt und zwischen zumindest zwei, diese Positionen repräsentierenden Zuständen geschaltet.

Wie strichpunktiert angedeutet, führt ein teilweises Einbringen der Keilplatte 31 in den einfallenden Laserstrahl 2 zur Bildung zweier Teilstrahlen **2a**, **2b**, so dass hier die optische Keilplatte 31 beispielhaft als Strahlteiler dient. Der erste Teilstrahl 2a wird von der Keilplatte 31 nicht beeinflusst und daher über die Einkopplungsoptik 32 weiterhin in den inneren Faserkern 4 eingekoppelt, während der zweite Teilstrahl 2b durch die Keilplatte 31 gegenüber dem ersten Teilstrahl 2a abgelenkt und über die Einkopplungsoptik 32 in den äußeren Ringkern 6 eingekoppelt wird. Der ausgekoppelte Laserstrahl 3 weist das Strahlprofil 53 auf. Ein teilweises Einbringen der Keilplatte 31 in den einfallenden Laserstrahl 2 führt also zur Bildung zweier Teilstrahlen 2a, 2b mit einer vom Maß der Einbringung abhängigen Aufteilung der Intensität zwischen dem inneren Faserkern 4 und dem äußeren Ringkern 6, wodurch das Strahlprofil des ausgekoppelten Laserstrahls 3 optimal an die jeweilige Applikation angepasst werden kann.

Weiterhin bieten die zwei Teilstrahlen 2a, 2b den wesentlichen Vorteil, den Bereich des ersten Claddings 5 bei der Einkopplung auszusparen. Es ist nämlich insbesondere für Anwendungen im Hochleistungsbereich wichtig, dass keine Laserstrahlung ins innere oder äußere Cladding 5, 7 eingekoppelt wird. Diese Strahlung propagiert mit großem Winkel im inneren Kern oder äußeren Ringkern und tritt am Faserende ebenfalls unter großem Winkel aus, wodurch sich die daran anschließende Optik aufheizen kann. Zudem kann die im äußeren Cladding 7 befindliche Strahlung das Coating der Faser 1 zerstören.

Ein Durchmesser des inneren Faserkerns 4 von ca. 100 µm gewährleistet bei typischen Anwendungen mit hohen Leistungen im kW-Bereich die Erzeugung einer guten Strahlprofilqualität bei Einkopplung des Laserstrahls 2 in den inneren Faserkern 4. Das erste Cladding 5 ist bereits mit ca. 10 µm, bevorzugt mit ca. 5 µm, ausreichend dick, um die Laserstrahlung gut zu führen. Bei einer Ringstärke des äußeren Ringkerns 6 von ca. 240 µm beträgt der Außendurchmesser des äußeren Ringkerns 6 ca. 600 µm. Das entspricht für bestimmte Anwendungen, wie z.B. Laserschweißen, der erforderlichen Verbreiterung des Laserstrahlprofils.

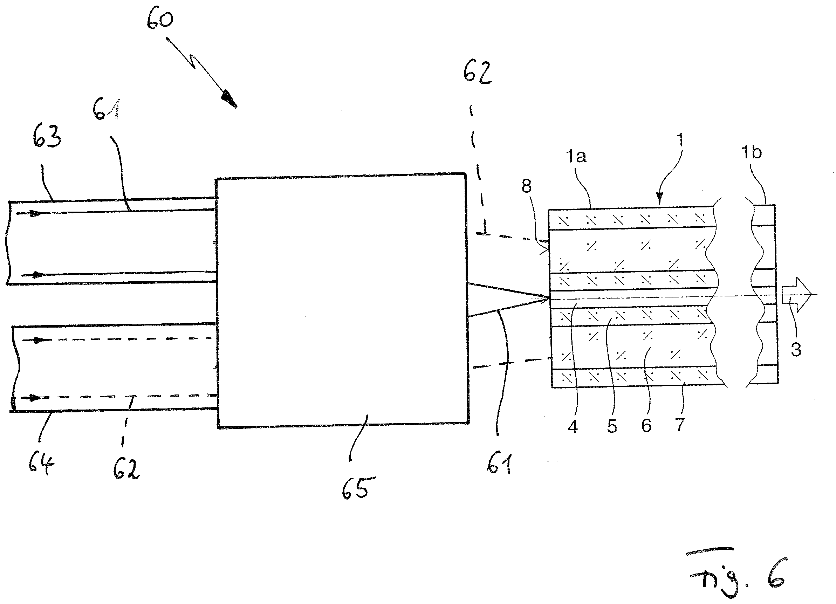

**Fig. 6** zeigt eine weitere Anordnung **60** zum Erzeugen eines Laserstrahls mit unterschiedlicher Strahlprofilcharakteristik, wobei wahlweise ein erster Laserstrahl **61** in den inneren Faserkern 4 der Doppelclad-Faser 1 und ein unterschiedlicher zweiter Laserstrahl **62** sowohl in den inneren Faserkern 4 als auch in den äußeren Ringkern 6 der Doppelclad-Faser 1 eingekoppelt werden. Die beiden Laserstrahlen 61, 62, die z.B. unterschiedliche Strahlqualitäten aufweisen können, werden jeweils in Lichtleitern **63, 64** zu einer hier lediglich schematisch gezeigten Umschaltoptik **65** (z.B. optisches Weichensystem) geführt, die zwischen zwei Schaltstellungen umschaltbar ist. In der einen Schaltstellung wird der die höhere Strahlqualität aufweisende erste Laserstrahl 61 in den inneren Faserkern 4 der Doppelclad-Faser 1 und in der anderen Schaltstellung der zweite Laserstrahl 62 sowohl in den inneren Faserkern 4 als auch in den äußeren Ringkern 6 der Doppelclad-Faser 1 eingekoppelt. Im ersten Fall weist der ausgekoppelte Laserstrahl 3 das Strahlprofil 51 und im zweiten Fall das Strahlprofil 53 auf. Die Doppelclad-Faser 1 führt zu einer Laserbearbeitungsmaschine (nicht gezeigt), so dass die Anordnung 60 zum Umschalten von Laserstrahlen 61, 62 unterschiedlicher Strahlqualität für die Laserbearbeitungsmaschine dient. Der Laserstrahl 62 kann über die Umschaltoptik 65 aber auch nur auf den äußeren Ringkern 6 der Doppelclad-Faser 1 ausgerichtet werden.

Bisher benötigten Laserbearbeitungsmaschinen, die mit mehreren Laserstrahlen unterschiedlicher Strahlqualität versorgt werden sollen, mehrere Steckeraufnahmen für die zugehörigen Lichtleiterkabel und ein entsprechendes optisches Weichensystem, mit dem die unterschiedlichen Laserstrahlen in den nachfolgenden Strahlengang eingekoppelt werden können. Für einen gewünschten Laserstrahl muss entweder das zugehörige Lichtleitkabel manuell umgesteckt werden, was aufgrund einer erhöhten Verschmutzungsgefahr unerwünscht ist, oder man benötigt an der Laserbearbeitungsmaschinen selbst eine Strahlführungsoptik. Dies ist nachteilig, da innerhalb der Laserbearbeitungsmaschine mehrere Lichtleitkabel verlegt werden müssen, die ganze Umschaltoptik auf dem Achssystem der Laserbearbeitungsmaschine untergebracht und bewegt werden muss und die Größe der Umschaltoptik in Verbindung mit dem zur Verfügung stehenden Raum die Möglichkeiten bzw. die möglichen optischen Konzepte einschränkt.

Bei der Anordnung 60 wird die Umschaltoptik 65 eingangsseitig von zwei Lasern mit den beiden Laserstrahlen unterschiedlicher Strahlqualität versorgt, und die jeweiligen Laserstrahlen 61, 62 werden über die Umschaltoptik 65 in die zentrale Doppelclad-Faser 1 eingekoppelt. Dadurch ist die Umschaltung zwischen den beiden Laserstrahlen 61, 62 vom Achssystem der Laserbearbeitungsmaschine getrennt und erfolgt außerhalb der eigentlichen Laserbearbeitungsmaschine, der dann der jeweilige Laserstrahl über die Doppelclad-Faser 1 zugeführt wird. Denkbar sind auch ein oder mehrere weitere lichtführende Ringkerne um den äußeren Ringkern 6 herum, so dass noch weitere Laserstrahlen unterschiedlicher Strahlqualität über die Umschaltoptik 65 geführt werden können.

## Patentansprüche

1. Verfahren zum Erzeugen eines Laserstrahls (3) mit unterschiedlicher Strahlprofilcharakteristik, wobei ein Laserstrahl (61, 62) in das eine Faserende (1a) einer Mehrfachclad-Faser (1), insbesondere einer Doppelclad-Faser, eingekoppelt und aus dem anderen Faserende (1b) der Mehrfachclad-Faser (1) ausgekoppelt wird, und wobei zum Erzeugen einer ersten Strahlprofilcharakteristik des ausgekoppelten Laserstrahls (3) ein erster Laserstrahl (61) zumindest in den inneren Faserkern (4) der Mehrfachclad-Faser (1) und zum Erzeugen einer unterschiedlichen zweiten Strahlprofilcharakteristik des ausgekoppelten Laserstrahls (3) ein unterschiedlicher zweiter Laserstrahl (62) zumindest in mindestens einen äußeren Ringkern (6) der Mehrfachclad-Faser (1) eingekoppelt werden.

2. Anordnung (60) zum Erzeugen eines Laserstrahls (3) mit unterschiedlicher Strahlprofilcharakteristik, wobei die Anordnung zumindest folgende Elemente aufweist:
eine Mehrfachclad-Faser (1), insbesondere eine Doppelclad-Faser, mit einem inneren Faserkern (4) und mindestens einem äußeren Ringkern (6),
sowie
eine schaltbare Vorrichtung (65) mit mindestens zwei Schaltstellungen, wobei in der ersten Schaltstellung wahlweise ein erster Laserstrahl (61) zumindest in den inneren Faserkern (4) der Mehrfachclad-Faser (1) und in der zweiten Schaltstellung ein unterschiedlicher zweiter Laserstrahl (62) zumindest in mindestens einen äußeren Ringkern (6) der Mehrfachclad-Faser (1) eingekoppelt werden.

3. Anordnung nach Anspruch 2, **dadurch gekennzeichnet, dass** der Durchmesser (2 *r*₁) des inneren Faserkerns (4) der Mehrfachclad-Faser (1) höchstens ca. 200 µm, insbesondere höchstens ca. 150 µm, vorzugsweise höchstens ca. 120 µm, beträgt.

4. Anordnung nach Anspruch 2 oder 3, **dadurch gekennzeichnet, dass** die Ringstärke (*r*₃ - *r*₂) des mindestens einen äußeren Ringkerns (6) der Mehrfachclad-Faser (1) größer oder gleich dem Durchmesser (2 *r*₁) des inneren Faserkerns (4) ist.

5. Anordnung nach einem der Ansprüche 2 bis 4, **dadurch gekennzeichnet, dass** bei der Mehrfachclad-Faser (1) die numerische Apertur eines den inneren Faserkern (4) umgebenden ersten Claddings (5) höher ist als die numerische Apertur eines den mindestens einen äußeren Ringkern (6) umgebenden zweiten Claddings (7).

6. Anordnung nach einem der Ansprüche 2 bis 5, **dadurch gekennzeichnet, dass** die schaltbare Vorrichtung (65) eingangsseitig zwei Lichtleiter (63, 64) aufweist, über die zwei unterschiedliche Laserstrahlen (61, 62) zuführbar sind, wobei die schaltbare Vorrichtung (65) in der ersten Schaltstellung den einen Laserstrahl (61) zumindest in den inneren Faserkern (4) der Mehrfachclad-Faser (1) und in der zweiten Schaltstellung den anderen Laserstrahl (62) zumindest in mindestens einen äußeren Ringkern (6) der Mehrfachclad-Faser (1) einkoppelt.

## Claims

1. A method for generating a laser beam (3) with different beam profile characteristics,
wherein a laser beam (61, 62) is coupled into one fibre end (1a) of a multi-clad fibre (1), in particular a double-clad fibre, and emitted from the other fibre end (1b) of the multi-clad fibre (1), and
wherein for the generation of a first beam profile characteristic of the output laser beam (3), a first laser beam (61) is coupled at least into the inner fibre core (4) of the multi-clad fibre (1) and for generating a different second beam profile characteristic of the output laser beam (3) a different, second laser beam (62) is coupled at least into at least one outer ring core (6) of the multi-clad fibre (1).

2. An arrangement (60) for generating a laser beam (3) with different beam profile characteristics, the arrangement comprising at least the following elements:
a multi-clad fibre (1), in particular a double-clad fibre, with one inner fibre core (4) and at least one outer ring core (6), and
a switchable device (65) with at least two switch positions, wherein in the first switch position a first laser beam (61) is electively coupled at least into the inner fibre core (4) of the multi-clad fibre (1) and in the second switch position a different, second laser beam (62) is coupled at least into at least one outer ring core (6) of the multi-clad fibre (1).

3. An arrangement according to claim 2, **characterised in that** the diameter (2 r₁) of the inner fibre core (4) of the multi-clad fibre (1) is maximum approximately 200 µm, in particular maximum approximately 150 µm and preferably maximum approximately 120 µm.

4. An arrangement according to claim 2 or 3, **characterised in that** the ring thickness (r₃ - r₂) of the at least one outer ring core (6) of the multi-clad fibre (1) is greater than or equal to the diameter (2 r₁) of the inner fibre core (4).

5. An arrangement according to one of claims 2 to 4, **characterised in that**, for the multi-clad fibre (1), the numerical aperture of a first cladding (5) surrounding the inner fibre core (4) is higher than the numerical aperture of a second cladding (7) surrounding the at least one outer ring core (6).

6. An arrangement according to one of claims 2 to 5, **characterised in that** the switchable device (65) comprises, on the input side, two optical fibres (63, 64) via which two different laser beams (61, 62) can be supplied, wherein in the first switch position the switchable device (65) couples one laser beam (61) at least into the inner fibre core (4) of the multi-clad fibre (1) and in the second switch position couples the other laser beam (62) at least into at least one outer ring core (6) of the multi-clad fibre (1).

## Revendications

1. Procédé pour générer un faisceau laser (3) ayant une caractéristique de profil de faisceau différente,
dans lequel
un faisceau laser (61, 62) est injecté dans une extrémité de fibre (la) d'une fibre à gaines multiples (1), en particulier d'une fibre à double gaine et extraite de l'autre extrémité de fibre (1b) de la fibre à gaines multiples (1), et
dans lequel
pour générer une première caractéristique de profil de faisceau du faisceau laser (3) extrait, un premier faisceau laser (61) est injecté au moins dans le coeur de fibre intérieur (4) de la fibre à gaines multiples (1) et pour générer une deuxième caractéristique de profil de faisceau, différente, du faisceau laser (3) extrait, un deuxième faisceau laser différent (62) est injecté au moins dans au moins un coeur annulaire extérieur (6) de la fibre à gaines multiples (1).

2. Agencement (60) pour générer un faisceau laser (3) ayant une caractéristique de profil de faisceau différente, lequel agencement présente au moins les éléments suivants :
une fibre à gaines multiples (1), en particulier une fibre à double gaine, avec un coeur de fibre intérieur (4) et au moins un coeur annulaire extérieur (6), ainsi que un dispositif commutable (65) ayant au moins deux positions de commutation, dans lequel, dans la première position de commutation au choix un premier faisceau laser (61) est injecté au moins dans le coeur de fibre intérieur (4) de la fibre à gaines multiples (1) et, dans la deuxième position de commutation, un deuxième faisceau laser différent (62) est injecté au moins dans au moins un coeur annulaire extérieur (6) de la fibre à gaines multiples (1).

3. Agencement selon la revendication 2, **caractérisé en ce que** le diamètre (2 *r*₁) du coeur de fibre intérieur (4) de la fibre à gaines multiples (1) est au maximum d'environ 200 µm, en particulier au maximum d'environ 150 µm, de préférence au maximum d'environ 120 µm.

4. Agencement selon la revendication 2 ou 3, **caractérisé en ce que** l'épaisseur (*r*₃ - *r*₂) dudit au moins un coeur annulaire extérieur (6) de la fibre à gaines multiples (1) est supérieure ou égale au diamètre (2 *r*₁) du coeur de fibre intérieur (4).

5. Agencement selon l'une des revendications 2 à 4, **caractérisé en ce que** dans la fibre à gaines multiples (1), l'ouverture numérique d'une première gaine (5) entourant le coeur de fibre intérieur (4) est supérieure à l'ouverture numérique d'une deuxième gaine (7) entourant ledit au moins un coeur annulaire extérieur (6).

6. Agencement selon l'une des revendications 2 à 5, **caractérisé en ce que** le dispositif commutable (65) présente côté entrée deux guides de lumière (63, 64) par lesquels deux faisceaux laser différents (61, 62) peuvent être amenés, lequel dispositif commutable (65), dans la première position de commutation, injecte l'un (61) des faisceaux laser au moins dans le coeur de fibre intérieur (4) de la fibre à gaines multiples (1) et, dans la deuxième position de commutation, l'autre faisceau laser (62) au moins dans au moins un coeur annulaire extérieur (6) de la fibre à gaines multiples (1).
